# EUROPÄISCHE PATENTSCHRIFT

(11) **EP 0 610 480 B1**
(45) Veröffentlichungstag und Bekanntmachung des Hinweises auf die Patenterteilung: **25.07.2001**
(21) Anmeldenummer: 93919114.4
(22) Anmeldetag: 20.08.1993
(51) Int. Cl.: B29B 7/24, B29C 47/10, B29C 31/04

(54) **BESCHICKUNGSEINRICHTUNG FÜR INNENMISCHER, SCHNECKENEXTRUDER O. DGL.**
FEED DEVICE FOR KNEADERS, WORM EXTRUDERS, ETC.
DISPOSITIF DE CHARGEMENT POUR MELANGEURS INTERNES, EXTRUDEUSES A VIS OU ANALOGUE

(30) Priorität: 22.08.1992 DE 4227906
(43) Veröffentlichungstag der Anmeldung: 17.08.1994
(73) Patentinhaber: Krupp Elastomertechnik GmbH, 21079 Hamburg (DE)
(72) Erfinder: SEIDE, Adolf, D-53721 Siegburg (DE); ENGEL, Wolfgang, D-57258 Freudenberg (DE)
(74) Vertreter: John, Ernst, Dipl.-Ing.
(86) Internationale Anmeldenummer: EP9302230
(87) Internationale Veröffentlichungsnummer: WO9404332

(56) Entgegenhaltungen:
- EP-A- 0 272 338
- EP-A- 0 402 723
- DE-A- 1 964 895
- GB-A- 703 015
- US-A- 3 525 387
- PATENT ABSTRACTS OF JAPAN vol. 3, no. 63 (C-47) 30. Mai 1979 & JP,A,54 036 367 (KOBE SEIKOSHO K.K.) 17 March 1979
- REVUE GENERALE DU CAOUTCHOUCS Bd. 41, Nr. 7-8, August 1964, PARIS FR Seiten 1125 - 1134 E. STALINSKY 'MELANGEURS INTERNES A PALETTES SUPERPOSEES'

## Beschreibung

Die Erfindung betrifft eine Beschickungseinrichtung für Innenmischer, Schneckenextruder o. dgl. mit mindestens einem Zuführschacht und mindestens einem Stopfer, wobei der Zuführschacht mit mindestens einer Beladeöffnung versehen ist.

Bei den bekannten Beschickungseinrichtungen der vorgenannten Art für Innenmischer wird ein rechteckiger oder runder Stempel in einem rechteckigen oder runden Beschickungsschacht linear auf und ab bewegt. Der Stempel ist an einer Stempelstange befestigt und wird durch diese geführt. Der Beschickungsschacht hat eine mittels einer Klappe verschließbare Öffnung, die ein horizontales Befüllen ermöglicht (EP-PS 0 272 338).

Die bekannten Beschickungseinrichtungen für Innenmischer weisen erhebliche Nachteile auf. Beispielsweise beträgt die Höhe der bekannten Beschickungseinrichtungen ein Mehrfaches des tatsächlich benötigten Stempelhubes. Ferner ist die Biege- und Torsionsfestigkeit der Stempelstange, bedingt durch ihr großes Längen-Durchmesser-Verhältnis, nicht ausreichend, um den Stempel definiert ohne Kontakt zum Beschickungsschacht zu führen. Der daraus resultierende Verschleiß der bekannten Beschickungseinrichtungen hat eine, wenn auch geringe, Verunreinigung des Mischgutes durch Metallpartikel zur Folge. Außerdem wird der Stempel während des Mischvorgangs ständig im Beschickungsschacht verdreht und schlägt am Beschickungsschacht an. Dies kann zu einem Dauerbruch der Kühlwasserleitungen und zu einer Beschädigung der Schachtplatten führen. Darüber hinaus muß bei einem Rezepturwechsel der Mischer häufig gereinigt werden, um eine Kontamination der Folgemischung auszuschließen. Da die bekannten Beschickungseinrichtungen im oberen Bereich nur sehr schwer zugänglich sind, er geben sich lange Reinigungs- und damit lange Maschinenstillstandszeiten.

Die bekannten Beschickungseinrichtungen der vorgenannten Art für Schneckenextruder haben beispielsweise als Stopfwerke an Kautschuk-Austragsextrudern die Aufgabe, das in unregelmäßiger Form anfallende Kautschukmaterial der Extruderschnecke vorzulegen und einen Preßdruck im Kautschuk zu erzeugen, so daß das Kautschukmaterial gleichmäßig und mit gutem Wirkungsgrad in den Extruder eingezogen wird. Die Beschickungseinrichtungen sind dabei als Linearstopfer ausgeführt und umfassen zwei zur Extruderschnecke radial angeordnete, hydraulisch linear bewegte, rechteckige Stopfkolben, von denen der eine als Nebenstopfer das Kautschukmaterial der Extruderschnecke vorlegt und der zweite als Hauptstopfer die radiale Preßkraft zum Einzug des Materials aufbringt.

Die bekannten Beschickungseinrichtungen für Schneckenextruder sind verhältnismäßig aufwendig in der Herstellung, benötigen viel Raum und bereiten bei der Reinigung und Wartung erhebliche Schwierigkeiten. Außerdem erfordern sie wegen der im Betrieb sich ergebenden Kräfteverhältnisse eine Halterung, die zu störend großen Dichtspalten führt.

Um eine bessere Handhabung zu erreichen schlägt die GB-A-0703 015 vor, den Beschickungsschacht zumindest teilweise kreisbogenförmig auszubilden und den Stempel schwenkbar um einen Drehpunkt zu lagern. Da jedoch in dieser Vorrichtung der Stempel nicht kreisbogenförmig ausgebildet und dessen Form somit an die Ausgestaltung des Beschickungsschachtes nicht angepaßt ist, wird eine besondere kompakte Bauweise nicht erreicht.

Der Erfindung liegt die Aufgabe zugrunde, die oben genannte Beschickungseinrichtung so auszubilden, daß sie einfach und leicht zu handhaben sowie störungs- und wartungsfrei ist und daß sie die vorgenannten Nachteile der bekannten Beschickungseinrichtungen nicht aufweist.

Die Lösung der gestellten Aufgabe besteht darin, daß bei einer Beschickungseinrichtung der eingangs genannten Art der Zuführschacht - ganz oder teilweise - und der Stopfer kreisbogenförmig gekrümmt sind und daß der Stopfer um einen Drehpunkt, der den Mittelpunkt der kreisbogenförmigen Krümmung bildet, schwenkbar angeordnet ist, so daß die Stirnplatte des Stopfers einer kreisbogenförmigen Bewegungsbahn folgt.

Ein wesentlicher Vorteil der erfindungsgemäßen Beschickungseinrichtung besteht darin, daß sich deren Höhe gegenüber den bekannten Beschickungseinrichtungen auf etwa ein Drittel verringert. Ein weiterer Vorteil besteht darin, daß infolge der definierten Bewegung des Stopfers auf einer Kreisbahn um einen festen Drehpunkt in Verbindung mit der verwindungssteifen Konstruktion ein wesentlich geringerer Verschleiß des Stopfers und des Zuführschachtes auftritt. Die kreisbogenförmige Bewegungsbahn der Stirnplatte des Stopfers gewährleistet eine sehr wirksame und betriebssichere Krafteinleitung und Kraftübertragung. Es können Kräfte aus verschiedenen Richtungen aufgenommen werden, ohne daß besondere Lagerungsvorkehrungen getroffen werden müssen. Ferner ist bei der erfindungsgemäßen Beschickungseinrichtung eine Optimierung der Spalte zwischen Stopfer und Zuführschacht möglich. So können der hintere und die seitlichen Spalte möglichst klein sein, um einer Verunreinigung des Zuführschachtes vorzubeugen, während der vordere Spalt größer belassen werden kann, um ein Entweichen der in den Füllstoffen eingeschlossenen Luft zu ermöglichen. Dadurch ist auch ein definiertes "Überströmen" des Stopfers an der abzureinigenden Vorderseite gewährleistet.

In Ausgestaltung der Erfindung sind an der Unterseite des Stopfers Kühlbohrungen, ein Massetemperaturfühler und/oder ein Weichmachereinspritzventil vorgesehen. Die Kühlbohrungen können durch im Stopfer verlegte Schläuche gespeist werden, so daß Rohre, die mit Stopfbuchsen abgedichtet werden müssen, nicht mehr benötigt werden. Durch die Bestückung der Unterseite des Stopfers mit einem Massetemperaturfühler und/oder einem Weichmachereinspritzventil, die wegen der verbesserten Zugänglichkeit des Stopfers möglich ist, ergeben sich zusätzliche verfahrenstechnische Möglichkeiten.

In weiterer Ausgestaltung der Erfindung sind an der Unterseite des Stopfers Nuten für die Aufnahme von Bürsten, Abstreifern o. dgl. vorgesehen. Hiermit kann, durch mehrmaliges Ein- und Ausfahren des Stopfers, in einfachster Weise und in kurzer Zeit der Zuführschacht gereinigt werden.

Das Schwenken des Stopfers um den Drehpunkt kann pneumatisch, hydraulisch, mechanisch oder elektrisch erfolgen. Zweckmäßigerweise wird das Schwenken des Stopfers durch einen Antrieb bewirkt, der den Stopfer winkelhebelartig betätigt. Die aus der Krafteinleitung resultierenden Reaktionskräfte bewirken im Zuführschacht und in den angrenzenden Bauteilen Druckspannungen und pressen sie somit an den Fügestellen zusammen, so daß die bei den bekannten, als Linearstopfer ausgebildeten Beschickungseinrichtungen bestehende Gefahr vermieden wird, daß sich die betreffenden Verschraubungen lösen, die zudem im Bereich des höchsten Stopfdruckes liegen.

Bei der erfindungsgemäßen Beschickungseinrichtung ist zweckmäßigerweise der Drehpunkt des Stopfers in der Trennebene zwischen der Mischkammer des Innenmischers und dem Zuführschacht angeordnet. Da in diesem Falle der Stopfer auch geringfügig unterhalb der Trennebene gelangt, ist eine Änderung der Mischkammer im Beschickungsbereich notwendig. Bei der Nachrüstung vorhandener Mischer mit einer erfindungsgemäßen Beschickungseinrichtung müssen daher die Schachtplatten ausgetauscht und durch neue Schachtplatten ersetzt werden, deren innere Kontur den Radius des Zuführschachtes aufweist.

Nach einem weiteren Merkmal der Erfindung sind bei der Beschickungseinrichtung zwei nebeneinander angeordnete Stopfer vorgesehen. Hierbei kann die Lage der Stirnplatten der Stopfer so gewählt werden, daß sie bei zurückgeschwenktem Stopfer parallel zur Wand des Zuführschachtes verlaufen, der Bewegung des Verarbeitungsgutes in Aufgaberichtung zur Extruderschnecke also nur einen geringen Widerstand entgegensetzen. Bei vorgeschwenktem Stopfer dagegen liegt dessen Stirnplatte zumindest annähernd tangential zur Extruderschnecke und erzeugt auf dem Weg dorthin wegen der zunehmenden Annäherung an die zu dieser radiale Kraftwirkung also eine optimale Stopfwirkung.

Bei einer bevorzugten Ausführungsform der Erfindung ist der Stopfer bzw. sind die Stopfer aus dem Zuführschacht vollständig nach außen ausschwenkbar. Hierdurch werden die Reinigung und die Wartung des Stopfers und des Zuführschachtes wesentlich erleichtert.

Die erfindungsgemäße Beschickungseinrichtung kann noch dadurch verbessert werden, daß die beiden Bewegungsbahnen der Stopfer in einer Querebene zu der Extruderschnecke eines Schneckenextruders einander gegenüberliegend verlaufen, daß die Wand des Zuführschachtes im Bereich der Stopfer ebenflächig und mit je einer Öffnung für den Durchtritt der Stopfer versehen ist und daß die Stopfer um etwa in der Verlängerung des Zuführschachtes und beiderseits der Extruderschnecke auf deren Höhe und zu ihr parallel liegende Schwenkachsen schwenkbar gelagert sind.

Die Lage der Bewegungsbahnen sorgt für einen einwandfreien Ablauf des Stopfvorgangs. Beide Stopferanordnungen, einschließlich der - ggf. zeitlich gegeneinander versetzt, zweckmäßig abwechselnd stattfindenden - Bewegungsabläufe, können übereinstimmend bzw. symmetrisch ausgeführt werden. Diese Vereinfachung führt auch zu einer weiteren Verringerung des Herstell- und Lageraufwandes. Die Anpassung der Stopfer an die Wand des Zuführschachtes kann in der Weise erfolgen, daß bei zurückgeschwenktem Stopfer dessen Stirnplatte mit der Wand bündig abschließt.

Eine weitere Verbesserung der erfindungsgemäßen Beschickungseinrichtung wird dadurch erzielt, daß an die Stirnplatten der beiden Stopfer in Richtung der Bewegungsbahn verlaufende Seitenwände anschließen, deren Länge dem Hub der Stopfer entspricht. Dadurch ist der Stopfer in seinen Abmessungen auf die jeweils geringstnotwendige Größe beschränkt. Auf der Kreisbogeninnenseite verkürzt er sich gegenüber der Außenseite entsprechend dem geringen Abstand zur Schwenkachse.

In Weiterbildung der Erfindung sind im Bereich der abseitig von der Extruderschnecke gelegenen Seitenwand der beiden Stopfer der Zuführschacht mit nach innen weisenden Abstreifern ausgestattet und die Stirnplatten der beiden Stopfer an ihren den Schwenkachsen zugewandten Seiten mit Abstreifkanten versehen, die an der hier zur Schnecke des Schneckenextruders hin eingezogenen, entsprechend der Bewegung der beiden Stopfer geformten

Übergangswand des Zuführschachtes entlanggleiten. Damit ist die besondere Gestaltung der erfindungsgemäßen Beschickungseinrichtung für eine höchst nachhaltige Abdichtung zwischen Stopfer und Zuführschacht mit einer Selbstreinigungswirkung genutzt.

Im folgenden wird die Erfindung anhand von zwei Ausführungsbeispielen in Verbindung mit der Zeichnung näher erläutert. Es zeigen:
- Fig. 1: die Beschickungseinrichtung eines Innenmischers, wobei nur der obere Teil des Innenmischers dargestellt ist, in einem Längsschnitt, in der Beschickungsposition;
- Fig. 2: die Beschickungseinrichtung gemäß Fig. 1, in der Mischposition;
- Fig. 3: die Beschickungseinrichtung gemäß Fig. 1, in der Reinigungsposition;
- Fig. 4: die Beschickungseinrichtung eines Schneckenextruders in einem Schnitt quer zur Schnecke des Schneckenextruders;
- Fig. 5: die Beschickungseinrichtung gemäß Fig. 4 in Seitenansicht.

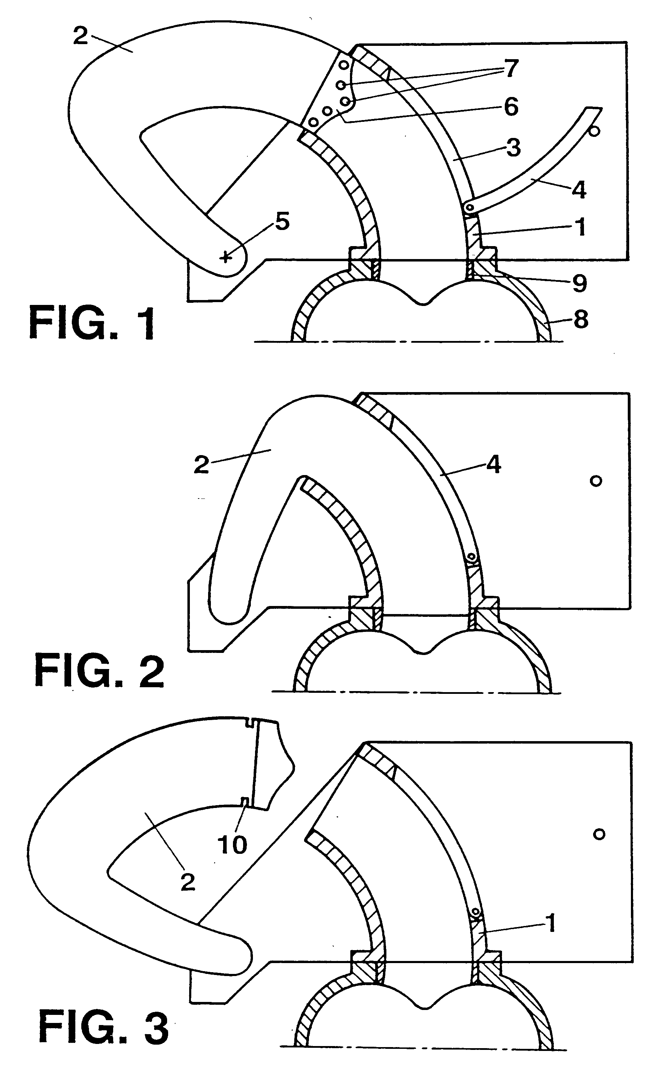

Die in den Fig. 1 bis 3 dargestellte Beschickungseinrichtung besteht im wesentlichen aus einem Zuführschacht 1 und einem Stopfer 2, die kreisbogenförmig gekrümmt sind. Der Zuführschacht 1 ist mit einer Beladeöffnung 3 versehen, die mittels einer Klappe 4 verschlossen werden kann. Der Stopfer 2 ist um einen Drehpunkt 5 schwenkbar angeordnet, wobei der Drehpunkt 5 den Mittelpunkt der kreisförmigen Krümmung bildet. Das Schwenken des Stopfers 2 um den Drehpunkt 5 wird durch einen - nicht dargestellten - Antrieb bewirkt, der den Stopfer 2 winkelhebelartig betätigt. Der Antrieb kann dabei pneumatisch, hydraulisch, mechanisch oder elektrisch erfolgen. An der Unterseite des Stopfers 2 ist eine Stirnplatte 6 angeordnet. Ferner sind an der Unterseite des Stopfers 2 Kühlbohrungen 7 vorgesehen. Der Drehpunkt 5 des Stopfers 2 ist in der Trennebene zwischen der Mischkammer des Innenmischers 8 und dem Zuführschacht 1 angeordnet. Der Innenmischer 8 weist in seinem oberen Bereich eine Schachtplatte 9 auf, deren innere Kontur dem Radius des Zuführschachtes 1 angepaßt ist.

Zur Beschickung des Innenmischers 8 werden der Stopfer 2 und die Klappe 4 in die Fig. 1 dargestellte Position gefahren.

Während des Mischvorgangs befinden sich der Stopfer 2 und die Klappe 4 in der Fig. 2 dargestellten Position.

Wenn eine Reinigung des Stopfers 2 und des Zuführschachtes 1 durchgeführt werden soll, wird der Stopfer 2 vollständig aus dem Zuführschacht 1 in die in Fig. 3 dargestellte Position gefahren. Diese Position ermöglicht ein Bestücken der an der Unterseite des Stopfers 2 vorgesehenen Nuten 10 mit Bürsten, Abstreifern o. dgl., mit deren Hilfe der gesamte Zuführschacht 1 durch mehrmaliges Ein- und Ausfahren des Stopfers 2 in kurzer Zeit gesäubert werden kann.

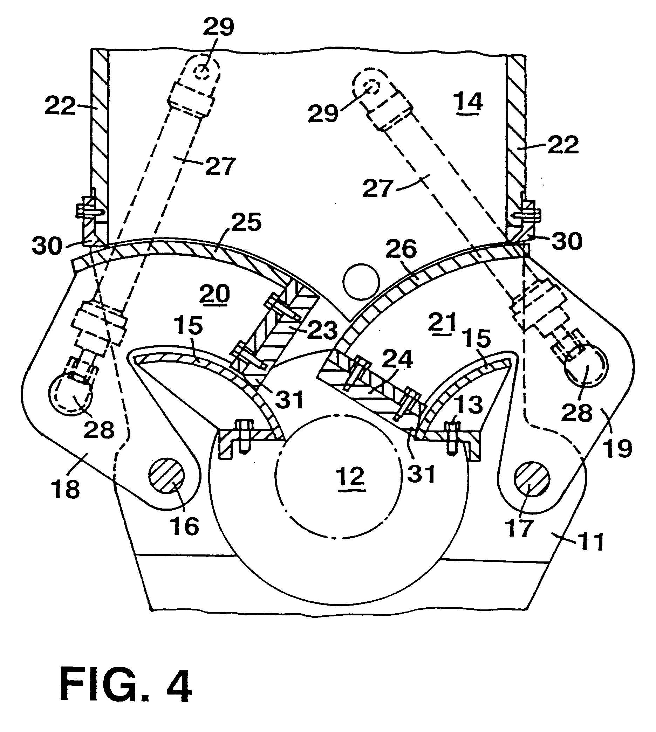

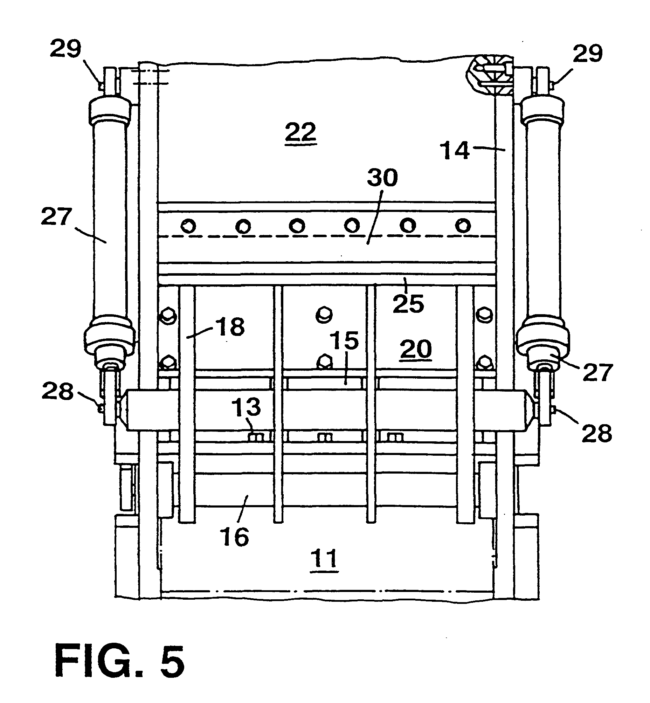

Bei der in den Fig. 4 und 5 dargestellten Beschickungseinrichtung ist an ein Extrudergehäuse 11 zur Aufnahme einer Extruderschnecke 12 mittels Schrauben 13 ein Zuführschacht 14 für die Beschickung des Extruders mit Verarbeitungsgut, beispielsweise zu knetendes Kautschukmaterial, angeschlossen. Der Zuführschacht 14 verengt sich an seinem unteren Ende über eine Übergangswand 15 und liegt mit der verbleibenden Öffnung über einer entsprechenden Öffnung im Extrudergehäuse 11. Seitlich am Extrudergehäuse 11 sind in Höhe der Achse der Extruderschnecke 12 und parallel zu ihr verlaufend zwei Schwenkachsen 16 und 17 angeordnet. Um diese Schwenkachsen 16 und 17 schwenkbar sind winkelhebelartig ausgebildete Gestelle 18 und 19 zweier Stopfer 20 und 21 gelagert. Die Stopfer 20 und 21 durchsetzen die Wand 22 des Zuführschachtes 14 und sind mit je einer Stirnplatte 23 und 24 sowie Seitenwänden versehen, von denen die oberen mit 25 und 26 bezeichnet sind. Die Stopfer 20 und 21 sind mittels Hydraulikantriebe 27 schwenkbar, die über Gelenkstellen 28 an den Gestellen 18 und 19 und Anlenkpunkten 29 am Zuführschacht 14 angelenkt sind. Die Länge der Seitenwände der Stopfer 20 und 21 entspricht dem Hub der Schwenkbewegung zwischen der in Fig. 4 dargestellten eingeschwenkten Lage und der ausgeschwenkten Lage, in der die Stirnplatten 23 und 24 die zugehörigen Öffnungen in der Wand 22 des Zuführschachtes 14 bündig verschließen. Die Übergangswand 15 ist entsprechend der Bewegung der inneren Seitenwand der Stopfer 20 und 21 geformt. Der Zuführschacht 14 ist an der von der äußeren Seitenwand 25 und 26 der Stopfer 20 und 21 überstrichenen Kante der betreffenden Öffnung mit einem nach innen weisenden Abstreifer 30 versehen. Die Stirnflächen 23 und 24 der Stopfer 20 und 21 weisen an ihren der Übergangswand 15 zugewandten Rändern Abstreifkanten 31 auf, mit denen sie an der Übergangswand 15 entlanggleiten.

## Patentansprüche

1. Beschickungseinrichtung für Innenmischer, Schneckenextruder o.dgl. mit mindestens einem Zuführschacht (1 bzw. 14) und mindestens einem Stopfer (2 bzw. 20, 21), wobei der Zuführschacht mit mindestens einer Beladeöffnung (3) versehen und zumindest teilweise kreisbogenförmig gekrümmt ist und wobei jeder Stopfer um einen den Mittelpunkt der kreisbogenförmigen Krümmung bildenden Drehpunkt (5 bzw. 16, 17) schwenkbar angeordnet ist, so daß die Stirnplatte (6 bzw. 23, 24) jedes Stopfers einer kreisbogenförmigen Bewegungsbahn folgt,
**dadurch gekennzeichnet**, daß
jeder Stopfer (2 bzw. 20, 21) ebenfalls kreisbogenförmig gekrümmt ist und der Zuführschacht (1 bzw. 14) zusätzlich zumindest eine Öffnung aufweist, durch welche jeder Stopfer aus dem Zuführschacht vollständig nach außen ausschwenkbar ist.

2. Beschickungseinrichtung nach Anspruch 1, dadurch gekennzeichnet, daß an der Unterseite des Stopfers (2) Kühlbohrungen (7), ein Massetemperaturfühler und/oder ein Einspritzventil vorgesehen sind.

3. Beschickungseinrichtung nach Anspruch 1 oder 2,
dadurch gekennzeichnet, daß an der Unterseite des Stopfers (2) Nuten (9) für die Aufnahme von Bürsten, Abstreifern o. dgl. vorgesehen sind.

4. Beschickungseinrichtung nach Anspruch 1, 2 oder 3,
dadurch gekennzeichnet, daß das Schwenken des Stopfers (2) durch einen Antrieb bewirkt wird, der den Stopfer (2) winkelhebelartig betätigt.

5. Beschickungseinrichtung nach einem der Ansprüche 1 bis 4, dadurch gekennzeichnet, daß zwei nebeneinander angeordnete Stopfer (20, 21) vorgesehen sind.

6. Beschickungseinrichtung für einen Schneckenextruder, nach einem der Ansprüche 1 bis 5, dadurch gekennzeichnet, daß die beiden Bewegungsbahnen der Stopfer (20, 21) in einer Querebene zu der Extruderschnecke (12) des Schneckenextruders einander gegenüberliegend verlaufen, daß die Wand (22) des Zuführschachtes (14) im Bereich der Stopfer (20, 21) ebenflächig und mit je einer Öffnung für den Durchtritt der Stopfer (20, 21) versehen ist und daß die Stopfer (20, 21) um etwa in der Verlängerung des Zuführschachtes (14) und beiderseits der Extruderschnecke (12) auf deren Höhe und zu ihr parallel liegende Schwenkachsen (16, 17) schwenkbar gelagert sind.

7. Beschickungseinrichtung nach Anspruch 6, dadurch gekennzeichnet, daß an die Stirnplatten (23, 24) der beiden Stopfer (20, 21) in Richtung der Bewegungsbahn verlaufende Seitenwände (25, 26) anschließen, deren Länge dem Hub der Stopfer (20, 21) entspricht.

8. Beschickungseinrichtung nach Anspruch 6 oder 7,
dadurch gekennzeichnet, daß im Bereich der abseitig von der Extruderschnecke (12) gelegenen Seitenwände (25, 26) der beiden Stopfer (20, 21) der Zuführschacht (14) mit nach innen weisenden Abstreifern (30) ausgestattet und die Stirnplatten (23, 24) der beiden Stopfer (20, 21) an ihren den Schwenkachsen (16, 17) zugewandten Seiten mit Abstreifkanten (31) versehen sind, die an der hier zur Extruderschnecke (12) hin eingezogenen, entsprechend der Bewegung der beiden Stopfer (20, 21) geformten Übergangswand (15) des Zuführschachtes (14) entlanggleiten.

## Claims

1. Feed device for kneaders, worm extruders or the like with at least one feed shaft (1 or 14) and with at least one packing means (2 or 20, 21), wherein said feed shaft is equipped with at least one loading opening (3) and is curved at least partially in a circular arc shape, and wherein each packing means is arranged to swivel around a pivot point (3 or 16, 17) forming the centre point of the circular arc-shaped curve, so that the end plate (6 or 23, 24) of each packing means follows a circular arc-shaped path of motion,
characterised in that
each packing means (2 or 20, 21) is likewise curved in a circular arc shape and the feed shaft (1 or 14) additionally has an opening, through which each packing means is swivelled fully outwards from the feed shaft.

2. Feed device according to Claim 1, characterised in that cooling holes (7), a mass temperature sensor and/or an injection valve are provided on the underside of the packing means (2).

3. Feed device according to Claim 1 or 2, characterised in that grooves (9) are provided on the underside of the packing means (2) to receive brushes, stripping devices or similar.

4. Feed device according to Claim 1, 2 or 3, characterised in that the swivelling motion of the packing means (2) is effected by a drive means, which operates the packing means (2) in the manner of an angle lever.

5. Feed device according to one of Claims 1 to 4,
characterised in that two packing means (20, 21) arranged adjacent are provided.

6. Feed device for a worm extruder according to one of Claims 1 to 5, characterised in that the two paths of motion of the packing means (20, 21) run opposite one another in a transverse plane to the extruder worm (12) of the worm extruder; in that the wall (22) of the feed shaft (14) is plane in the region of the packing means (20, 21) and is provided with a respective opening for passage of each of the packing means (20, 21), and in that the packing means (20, 21) are disposed to swivel around pivot axes (16, 17), which are located approximately in the extension of the feed shaft (14) and on both sides of the extruder worm (12) lying at its level and parallel thereto.

7. Feed device according to Claim 6, characterised in that side walls (25, 26) extending in the direction of the path of motion adjoin the end plates (23, 24) of the two packing means (20, 21), the length of said side walls corresponding to the stroke of the packing means (20, 21).

8. Feed device according to Claim 6 or 7, characterised in that in the region of the side walls (25, 26) of the two packing means (20, 21) located remote from the extruder worm (12), the feed shaft (14) is equipped with inwardly pointing stripping devices (30) and the end plates (23, 24) of the two packing means (20, 21) are provided with stripping edges (31) on their sides facing the pivot axes (16, 17), said stripping edges sliding along the transition wall (15) of the feed shaft (14), which is drawn in here towards the extruder worm (12) and shaped in a manner corresponding to the motion of the two packing means (20, 21).

## Revendications

1. Installation de chargement pour des mélangeurs internes, des extrudeuses à vis ou analogues, avec au moins un puits d'amenée (1 respectivement 14) et au moins un organe de bourrage (2 respectivement 20, 21), où le puits d'amenée est pourvu d'au moins une ouverture de chargement (3) et est courbé au moins partiellement en forme d'arc de cercle et où chaque organe de bourrage est disposé d'une manière pivotante autour d'un point de pivotement (5 respectivement 16, 17) formant le centre de la courbure en forme d'arc de cercle de telle sorte que la plaque frontale (6 respectivement 23, 24) de chaque organe de bourrage suit une trajectoire en forme d'arc de cercle,
caractérisée en ce que
chaque organe de bourrage (2 respectivement 20, 21) est également courbé en forme d'arc de cercle et en ce que le puits d'amenée (1 respectivement 14) présente de plus au moins une ouverture à travers laquelle chaque organe de bourrage peut être amené à pivoter hors du puits d'amenée complètement vers l'extérieur.

2. Installation de chargement selon la revendication 1, caractérisée en ce que sont prévus au côté inférieur de l'organe de bourrage (2) des perçages de refroidissement (7), un capteur de température de masse et/ou une vanne d'injection.

3. Installation de chargement selon la revendication 1 ou 2, caractérisée en ce que sont prévues au côté inférieur de l'organe de bourrage (2) des rainures (9) pour la réception de brosses, de raclettes ou analogues.

4. Installation de chargement selon la revendication 1, 2 ou 3, caractérisée en ce que le pivotement de l'organe de bourrage (2) est provoqué par un entraînement qui actionne l'organe de bourrage (2) à la manière d'un levier coudé.

5. Installation de chargement selon l'une des revendications 1 à 4, caractérisée en ce que sont prévus deux organes de bourrage (20, 21) disposés l'un à côté de l'autre.

6. Installation de chargement pour une extrudeuse à vis selon l'une des revendications 1 à 5, caractérisée en ce que les deux trajectoires des organes de bourrage (20, 21) s'étendent dans un plan transversal à la vis d'extrudeuse (12) de l'extrudeuse à vis en étant opposées l'une à l'autre, en ce que la paroi (22) du puits d'amenée (14) est plane au voisinage des organes de bourrage (20, 21) et est pourvue respectivement d'une ouverture pour le passage des organes de bourrage (20, 21), et en ce que les organes de bourrage (20, 21) sont logés d'une manière pivotante autour d'axes de pivotement (16, 17) situés approximativement dans le prolongement du puits d'amenée (14) et des deux côtés de la vis d'extrudeuse (12) à la hauteur de celle-ci et parallèlement à celle-ci.

7. Installation de chargement selon la revendication 6, caractérisée en ce que font suite aux plaques frontales (23, 24) des deux organes de bourrage (20, 21) des parois latérales (25, 26) s'étendant dans la direction de la trajectoire, dont la longueur correspond à la course des organes de bourrage (20, 21).

8. Installation de chargement selon la revendication 6 ou 7, caractérisée en ce qu'au voisinage des parois latérales (25, 26) des deux organes de bourrage (20, 21) situées au loin de la vis d'extrudeuse (12), le puits d'amenée (14) est équipé de raclettes (30) orientées vers l'intérieur, et les plaques frontales (23, 24) des deux organes de bourrage (20, 21) sont pourvues à leurs côtés orientés vers les axes de pivotement (16, 17) d'arêtes de raclage (31) qui glissent le long de la paroi de transition (15) du puits d'amenée (14) rentrée ici vers la vis d'extrudeuse (12), formée conformément au mouvement des deux organes de bourrage (20, 21).
